# EUROPÄISCHE PATENTSCHRIFT

(11) **EP 0 569 756 B1**
(45) Veröffentlichungstag und Bekanntmachung des Hinweises auf die Patenterteilung: **23.09.1998**
(21) Anmeldenummer: 93106626.0
(22) Anmeldetag: 23.04.1993
(51) Int. Cl.: C08J 11/00, C09D 7/00, C08G 18/80, C08L 75/04

(54) **Verfahren zur Wiederverwertung von Lackschlamm**
Process for reclaiming lacquer sludges
Procédé pour réutiliser les boues de peintures

(30) Priorität: 06.05.1992 DE 4214943
(43) Veröffentlichungstag der Anmeldung: 18.11.1993
(73) Patentinhaber: BAYER AG, 51368 Leverkusen (DE)
(72) Erfinder: Hovestadt, Wieland, Dr., W-4150 Krefeld (DE); Brück, Jochen, Dr., W-5000 Köln 80 (DE); Schneider, Volker, Dr., W-4175 Wachtendonk (DE)

(56) Entgegenhaltungen:
- EP-A- 0 158 896
- EP-A- 0 168 625
- EP-A- 0 556 670
- US-A- 4 220 456

## Beschreibung

Die Erfindung betrifft ein Verfahren zur Aufarbeitung von beim Verspritzen von lösungsmittelhaltigen 1- oder 2-Komponenten-Polyurethanlacken anfallenden Lackschlamm unter Wiederverwertung der dabei isolierten organischen Bestandteile.

Lösungsmittelhaltige 2-Komponenten-Polyurethanlacke des Standes der Technik haben aufgrund ihrer hervorragenden Eigenschaften eine große praktische Bedeutung auf dem Beschichtungssektor gewonnen. Die Lacke werden in der Praxis in der Regel durch Spritzen auf die zu beschichtenden Substrate aufgetragen. Hierbei kann nicht vermieden werden, daß durch "Overspray" nennenswerte Mengen des eingesetzten Beschichtungsmittels verloren gehen. In der Praxis werden diese überschüssigen Mengen im allgemeinen mit Hilfe von Wasser aus der Abluft der Beschichtungsanlage ausgewaschen und unter Mitverwendung von Koagulierungsmitteln, wie beispielsweise oberflächenaktiven, anorganischen Material, wie Tonerde, zur Koagulation gebracht. Dieser "Lackschlamm" konnte bislang keiner sinnvollen Wiederverwendung zugeführt werden.

Es war daher die der Erfindung zugrundeliegende Aufgabe, ein Verfahren zu entwickeln, welches eine sinnvolle Aufbereitung der im Lackschlamm vorliegenden Bindemittelkomponenten ermöglicht, bevor diese aufgrund der allmählich fortschreitenden Vernetzungsreaktion völlig unbrauchbar geworden sind. Das Verfahren sollte auch für lösungsmittelhaltige 1-Komponenten-Polyurethanlacke anwendbar sein, deren Bindemittel aus feuchtigkeitshärtenden NCO-Prepolymeren bestehen.

Es wurde jetzt gefunden, daß Lacke, bestehend im wesentlichen aus
a) organischen Polyisocyanaten,
b) vorzugsweise (im Fall der 2-Komponenten-Polyurethanlacke) organische Verbindungen mit gegenüber Isocyanatgruppen reaktionsfähigen Gruppen vorzugsweise organischen Polyhydroxylverbindungen,
c) gegebenenfalls Pigmenten und/oder sonstigen Lackhilfsmitteln,
d) Lösungsmittel
wiederverwertet werden können, wenn der "Overspray" des Lackes mit im Wasser der Beschichtungsanlage gegebenenfalls durch Einsatz von Emulgatoren gelösten oder dispergierten Verbindungen zur Reaktion gebracht wird, welche gegenüber Isocyanaten eine höhere Reaktivität als die acide Wasserstoffatome enthaltenden Reaktionspartner der Polyisocyanate und als Wasser aufweisen. Der Lackschlamm wird unter Einsatz von Koagulierungsmittel isoliert und die organischen Bestandteile extrahiert.

Gegenstand der Erfindung ist somit ein Verfahren zur Wiederverwertung des beim Verspritzen von lösungsmittelhaltigen 2-Komponenten-Polyurethanlacken oder feuchtigkeitstrocknenden 1-Komponenten-Polyurethanlacken anfallenden "Overspray", dadurch gekennzeichnet, daß man
i) den "Overspray" mit Hilfe einer wäßrigen Phase aus der Abluft der Beschichtungsanlage auswäscht, die, gegebenenfalls unter Mitverwendung von Emulgatoren, gelöste oder dispergierte Verbindungen enthält, welche gegenüber Isocyanatgruppen eine höhere Reaktivität aufweisen als Wasser und die gegebenenfalls in den 2-Komponenten-Polyurethanlacken mitverwendete Reaktivkomponente mit gegenüber Isocyanatgruppen reaktionsfähigen Gruppen,
ii) den in der Stufe (i) spontan gebildeten chemisch modifizierten "Overspray" unter Einsatz von Koagulierungsmitteln, die gegebenenfalls bereits dem Waschwasser zugesetzt worden sind, in Form von Lackschlamm isoliert,
iii) den aus ausreagierten Lackbestandteilen und Koagulierungsmitteln sowie aus Wasser bestehenden Lackschlamm, gegebenenenfalls nach Entfernung zumindest eines Teils des Wassers, mit einem organischen Lösungsmittel vermischt.
iv) die gemaß (iii) anfallende organische Phase von der gegebenenfalls vorliegenden, wäßrigen Phase und/oder von gegebenenfalls vorliegenden, unlöslichen Bestandteilen befreit und die darin gelösten, organischen Bestandteile einer Wiederverwendung zuführt.

Der hier verwendete, aus dem englischen entlehnte neudeutsche Begriff "Overspray" soll diejenigen Lackbestandteile umfassen, die beim Verspritzen des Lacks nicht auf das zu beschichtende Substrat treffen und daher in die Abluft der Beschichtungsanlage gelangen und auf diese Weise bislang, wie bereits oben ausgeführt, verloren gehen.

Das erfindungsgemäße Verfahren dient vorzugsweise zur Aufarbeitung von Lackschlamm, der bei der Verarbeitung von 2-Komponenten-Polyurethanlacken anfällt.

Die Polyisocyanatkomponente in derartigen 2-Komponenten-Polyurethanlacken besteht vorzugsweise aus sogenannten Lackpolyisocyanaten, d.h. aus Biuret-, Isocyanurat-, Urethan-, Allophanat- und/oder Uretdiongruppen aufweisenden Derivaten von einfachen Diisocyanaten wie insbesondere 1,6-Diisocyanatohexan oder Gemischen von 1,6-Diisocyanatohexan mit 1-Isocyanato-3,3,5-trimethyl-5-isocyanatomethylcyclohexan und/oder, weniger bevorzugt, auf Basis von aromatischen Diisocyanaten wie 2,4- und/oder 2,6-Diisocyanatotoluol. Diese an sich bekannten Lackpolyisocyanate weisen im allgemeinen einen Gehalt an monomeren Ausgangsdiisocyanaten von unter 0,5 Gew.-% und einen Gehalt an Isocyanatgruppen von ca. 15- 25 Gew.-% auf.

Bei den gegenüber Isocyanatgruppen reaktionsfähigen Reaktionspartnern in 2-Komponenten-Polyurethanlacken handelt es sich vor allem um die an sich bekannten höhermolekularen Polyhydroxylverbindungen mit einem Hydroxylgruppengehalt von 0,1 bis 10 Gew.-%. Beispielhaft genannt seien die an sich bekannten hydroxyfunktionellen Polyester, Polyether, Polyacrylate, Polyurethane, Polydienharze und Epoxidharze, sowie Mischungen, Kombinationen oder Umsetzungsprodukte derartiger Polyhydroxylverbindungen.

Bei den erfindungsgemäß weniger bevorzugten 1-Komponenten-Polyurethanlacken handelt es sich um solche, deren Bindemittel aus NCO-Prepolymeren mit einem NCO-Gehalt von ca 3 - 16 Gew.-% bestehen, und die durch Umsetzung der oben beispielhaft genannten einfachen Diisocyanate oder auch der beispielhaft genannten Lackpolyisocyanate mit unterschüssigen Mengen an Polyhydroxylverbindungen der genannten Art erhalten werden.

Gegebenenfalls dem Originallack zugesetzte Pigmente, Füllstoffe und Lackhilfsmittel wie Verlaufsmittel, Glanzverbesserer, Antiabsetzmittel, Verdicker, Thixotropiemittel, Antioxidantien, Hitzestabilisatoren usw. haben auf das erfindungsgemäße Verfahren keinen Einfluß. Je nach Löslichkeit finden sich diese Bestandteile entweder in der gemäß Verfahrensstufe (iv) anfallenden organischen Phase oder in der unlöslichen festen Phase wieder.

Bei den in der Verfahrensstufe (i) eingesetzten Verbindungen mit gegenüber Isocyanatgruppen reaktionsfähigen Gruppen handelt es sich vorzugsweise um im Sinne der Isocyanat-Additionsreaktion monofunktionelle Verbindungen, die gegenüber Isocyanatgruppen eine höhere Reaktionsbereitschaft aufweisen als Wasser und die in 2-Komponenten-Polyurethanlacken eingesetzten Reaktivkomponenten (insbesondere die vorbeschriebenen Polyhydroxylverbindungen). In Betracht kommen pnmäre oder sekundäre Monoamine mit aliphatisch gebundenen Aminogruppen. beispielsweise n-Butylamin, Isobutylamin, n-Pentylamin, n-Hexylamin-, n-Stearylamin, Dimethylamin. Diethylamin, Di-n-propylamin, Di-n-butylamin, Di-n-pentylamin, Di-n-hexylamin, Diisopropylamin, N-Methyl-n-stearylamin, Di-n-stearylamin, Cyclohexylamin, Piperidin, Pyrrolidin oder Morpholin. Ebenfalls geeignet, jedoch weniger bevorzugt sind aromatische, pnmäre und sekundäre, monofunktionelle Amine.

Im Falle der Verwendung von derartigen Monoaminen entstehen beim erfindungsgemäßen Verfahren Gemische von Bindemittelbestandteilen, die beispielsweise in oder als Reaktivkomponente(n) für organische Polyisocyanate eingesetzt werden können. Im Falle der Verwendung von leicht flüchtigen Monoaminen stellen diese den nachstehend genannten Verbindungen vergleichbare Blockierungsmittel dar, so daß die letzendlich erhaltenen Gemische auch in oder als Einbrennlacke(n) eingesetzt werden können, bei deren Aushärtung die Monoamine wie Blockierungsmittel abgespalten werden.

Eine weitere Gruppe von Verbindungen mit gegenüber Isocyanatgruppen reaktionsfähigen Gruppen, die in der Verfahrensstufe (i) zum Einsatz gelangen können sind gegenüber Isocyanatgruppen hochreaktive, monofunktionelle Blockierungsmittel wie insbesondere Oxime wie beispielweise Aceton-, Butanon- oder Cyclohexanonoxim. Im Falle der Verwendung von derartigen Verbindungen entstehen beim erfindungsgemäßen Verfahren letztendlich Lösungen bzw. Bindemittelgemische, die als Einbrennlacke oder zu deren Herstellung verwendet werden können. Hierbei und im Fall der Verwendung der vorstehend genannten leicht flüchtigen Monoamine kann es sich sowohl um lösungsmittelhaltige Einbrennlacke als auch (nach Entfernung des Lösungsmittels z.B. durch Sprühtrocknen) um Pulverlacke handeln.

Eine weitere Gruppe von Verbindungen, die in der Verfahrensstufe (i) eingesetzt werden können, sind Aminoalkohole, die wegen der extrem unterschiedlichen Reaktivität der Amino- und Hydroxylgruppen in erster Näherung als "im Sinne der Isocyanat-Additionsreaktion monofunktionell" bezeichnet werden können, insbesondere dann, wenn sie in solchen Mengen eingesetzt werden, daß auf jede Isocyanatgruppe mindestens eine Aminogruppe entfällt. Beispiele derartiger Aminoalkohole sind 2-Aminoethanol, 2-(Methylamino)-ethanol, Diethanolamin, 3-Amino-1-propanol, 1-Amino-2-propanol, Diisopropanolamin, 2-Amino-2-methyl-propanol, 2-Amino-2-methyl-1,3-propandiol, 2-Amino-2-hydroxymethyl-1,3-propandiol oder deren Gemische.

Im Falle der Verwendung von derartigen Aminoalkoholen resultieren letztendlich Lösungen oder Gemische von organischen Polyhydroxylverbindungen, die beispielsweise erneut als Polyolkomponente in 2-Komponenten-Polyurethanlacken Verwendung finden können.

Als Verbindung mit gegenüber Isocyanatgruppen reaktionsfähigen Gruppen, die in der Verfahrensstufe (i) eingesetzt werden können, kommen weiterhin, jedoch weniger bevorzugt, Verbindungen in Betracht, die neben einer gegenüber Isocyanatgruppen hochreaktiven Gruppe eine weitere funktionelle Gruppe, insbesondere eine Carboxylat- oder Sulfonatgruppe aufweisen. Beispiele derartiger Verbindungen sind inbesondere die Alkalisalze von Aminocarbonsäuren oder Aminosulfonsäuren.

Im Falle der Verwendung derartiger Verbindungen entstehen in Wasser dispergierbare Umsetzungsprodukte, die beispielsweise als Zusatzmittel in wäßrigen Beschichtungsmitteln Verwendung finden können.

Ebenfalls geeignet sind Mischungen der oben genanten und gegebenenfalls anderer Verbindungen, die gegenüber Isocyanatgruppen eine höhere Reaktivitätsbereitschaft aufweisen als Wasser und die in dem 2-Komponenten-Polyurethanlack eingesetzte Reaktivkomponente.

Besonders bevorzugte Verbindungen mit gegenüber Isocyanatgruppen reaktionsfähigen Gruppen, die in der Verfahrensstufe (i) eingesetzt werden können sind die beispielhaft genannten, sekundären Monoamine, Oxime und Aminoalkohole.

Ist die Verbindung mit gegenüber Isocyanatgruppen reaktionsfähigen Gruppen, die in der Verfahrensstufe (i) zum Einsatz gelangt, in dem Wasser der Beschichtungsanlage unlöslich, so kann sie durch herkömmliche Emulgatoren des anionischen, kationischen oder nichtkationischen Typs in eine wasserlösliche oder -dispergierbare Form überführt werden.

Geeignete Emulgatoren sind nichtionische oder anionische Tenside, wie z.B.
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 40 Ethylen- bzw. Propylenoxideinheiten, und/oder
2) Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen im Alkylrest; gegebenenfalls diese Alkohole oder Alkylphenole auch mit 1 bis 40 Ethylenoxid-(EO-)Einheiten ethoxyliert sein, und/oder
3) Phosphorsäureteilester und deren Alkali- und Ammoniumsalze, besonders Alkyl- bzw. Alkylarylphosphonate mit 8 bis 20 C-Atome im organischen Rest, Alkylether bzw. Alkylaryletherphosphate mit 8 bis 20 C-Atome im Alkyl- bzw. Alkylarylrest und 1 bis 40 EO-Einheiten, und/oder
4) Alkylpolyglykolether bevorzugt mit 8 bis 40 EO-Einheiten und Alkylresten von 8 bis 20 C-Atomen, und/oder
5) Alkylarylpolyglykolether bevorzugt mit 8 bis 40 EO-Einheiten und 8 bis 20 C-Atomen in den Alkyl- und Arylresten, und/oder
6) Ethylenoxid/Propylenoxid (EO/PO)-Blockcopolymere bevorzugt mit 8 bis 40 EO- bzw. PO-Einheiten, und/oder
7) Ammonium-Amphiphile mit einer Ketterlänge von 4 bis 15 C-Atomen in den Alkylresten und Gemische dieser und/oder anderer Emulgatoren bzw. oberflächenaktiver Substanzen.

Bei dem in dem erfindungsgemäßen Verfahren eingesetzten Koagulierungsmittel handelt es sich z.B. um Substanzen, die eine gewisse Affinität gegenüber den organischen Bestandteilen der Lacke aufweisen und eine Entklebung, d.h. eine Verhinderung des Anklebens der Lackbestandteile an den eingesetzten Geräten und Behältern verhindern. Der Einsatz der Koagulierungsmittel in Kombination mit Wasser bewirkt im allgemeinen die Bildung eines mehrphasigen Systems, in welchem die organischen Bindemittelbestandteile des eingesetzten Lackes (in gemäß Verfahrensstufe (i) chemisch modifizierter Form) koaguliert bzw. an dem Koagulierungsmittel adsorbiert vorliegen. Diese festen Bestandteile können durch Flotation oder Sedimentation von der Hauptmenge des Wassers abgeschieden und kontinuierlich abgeräumt werden und bilden dann den in der Verfahrensstufe (ii) isolierten Lackschlamm.

Geeignete Koagulierungsmittel sind auch beispielsweise oberflächenaktive Substanzen wie beispielweise Metalloxide bzw. -hydroxide, wie Aluminiumoxide oder -hydroxide bzw. Eisenoxide, -oxidhydrate oder -hydroxide, Schichtsilikate, Wachsemulsionen oder Tonerde. Bevorzugtes Koagulierungsmittel ist Tonerde. Die bevorzugten Koagulierungsmittel sind sowohl in Wasser als auch im verwendeten Extraktionsmittel unlöslich.

Bei den in der Verfahrensstufe (iii) eingesetzten Lösungs- bzw, Extraktionsmitteln handelt es sich vorzugsweise um Lösungsmittel der auch in den ursprünglichen Lacken eingesetzten Art, wobei Identität der Lösungsmittel selbstverständlich nicht erforderlich ist. Geeignete Lösungsmittel sind beispielsweise Aceton, Methylethylketon, Methylisobutylketon, Cyclopentanon, Cyclohexanon, Aromaten wie Benzol, Toluol, Xylol, Chlorbenzol, Nitrobenzol, Ether wie Tetrahydrofuran, Dioxan, Butylglykol, Ester wie Ethylacetat, Propylacetat, Butylacetat, Chlorkohlenwasserstoffe und aprotische Lösungsmittel wie Dimethylformamid, Dimethylacetamid, Dimethylsulfoxid oder Mischungen hieraus. Bevorzugt werden solche Lösungsmittel eingesetzt, in denen die organischen Lackbestandteile gut löslich sind, die jedoch selbst nicht oder nur sehr begrenzt mit Wasser mischbar sind. Hierzu gehören beispielsweise Butylacetat und insbesondere aromatische Kohlenwasserstoffe wie Toluol oder Xylol.

Bei der Durchführung des erfindungsgemäßen Verfahrens kommt das Wasser in einem sehr hohen Überschuß, bezogen auf die als "Overspray" anfallenden Lackbestandteile zum Einsatz.

Die Koagulierungsmittel werden im allgemeinen in Mengen von 1 bis 1 000, vorzugsweise 5 - 500 Gew.-%, bezogen auf das Gewicht des "Oversprays", eingesetzt.

Die Menge der in der Verfahrensstufe (i) eingesetzten Komponente mit gegenüber Isocyanatgruppen reaktionsfähigen Gruppen beträgt im allgemeinen 0,001 - 50, vorzugsweise 0,05 bis 10 Gew.-%, bezogen auf die Menge des Wassers, mindestens wird sie jedoch so gewählt, daß auf jede im "Overspray" vorliegende Isocyanatgruppe mindestens 0,25, vorzugsweise mindestens 0,9 und besonders bevorzugt mindestens 1,0 gegenüber Isocyanatgruppen hochreaktive Gruppen der genannten Art vorliegen.

Die Menge des eingesetzten Emulgators wird, falls überhaupt erforderlich, möglichst gering gehalten und beträgt 0,01 - 50, vorzugsweise 0,1 bis 20 Gew.-%, bezogen auf die in der Verfahrensstufe (i) eingesetzte Komponente mit gegenüber Isocyanatgruppen reaktionsfähigen Gruppen.

Die Menge des Lösungsmittels in Verfahrensstufe (iii) wird so gewählt, daß eine gute Abtrennung zwischen fester und flüssiger Phase möglich wird. Üblicherweise ist die 0,5 bis 5-fache Menge, bezogen auf den Lackschlamm, der im wesentlichen, wie ausgeführt, aus Koagulierungsmittel, anhaftendem Wasser und ausreagierten Lackbestandteilen besteht, erforderlich und ausreichend.

Bei der Durchführung des erfindungsgemäßen Verfahrens werden die beispielhaft genannten, gegenüber Isocyanatgruppen hochreaktiven Verbindungen im Waschwasser der Spritzanlage wie beschrieben gelöst bzw. dispergiert und die dabei anfallende wäßrige Lösung bzw. Dispersion zum Auswaschen der Abluft verwendet. Hierbei läuft spontan eine Reaktion der im "Overspray" vorliegenden Isocyanatgruppen mit den gegenüber Isocyanatgruppen hochreaktiven Gruppen der erfindungswesentlichen Hilfsmittel statt. Der Auswaschprozeß und die genannte Umsetzung erfolgt im allgemeinen innerhalb des Temperaturbereichs von 0 bis 100°C, vorzugsweise 10 bis 60°C. Die im Waschwasser anfallenden, durch die erfindungsgemäße chemische Reaktion modifizierten Lackbestandteile werden in der Verfahrensstufe (ii) unter Einsatz von Koagulierungsmitteln der beispielhaft genannten Art isoliert, wobei die Verfahrensstufen (i) und (ii) gleichzeitig oder nacheinander ablaufen können. Einerseits kann das Koagulierungsmittel bereits mit der wäßrigen Lösung oder Dispersion des erfindungswesentlichen Zusatzmittels vermischt werden, so daß die erfindungswesentliche chemische Modifizierung und die Bildung des Lackschlamms durch Koagulation praktisch gleichzeitig ablaufen, andererseits ist es auch möglich, zunächst die chemische Reaktion gemäß Verfahrensstufe (i) in Abwesenheit von Koagulierungsmitteln durchzuführen und diese erst anschließend zuzusetzen, um den Lackschlamm als Koagulat zu isolieren. Der Lackschlamm wird schließlich durch Flotation oder Sedimentation abgeschieden und durch Dekantieren oder Filtrieren von der Hauptmenge des Wassers befreit. Der dergestalt isolierte Lackschlamm wird dann in der nachfolgenden Verfahrensstufe (iii) mit dem Lösungsmittel vermischt. Schließlich werden in der letzten Verfahrensstufe (iv) noch vorliegendes Wasser, beispielsweise durch Phasentrennung, Destillation oder azeotrope Destillation und feste Bestandteile durch Filtration oder Dekantieren aus der Lösungsmittelphase abgetrennt. Die resultierende Lösung enthält die chemisch modifizierten Lackbestandteile, die, entsprechend den oben gemachten Ausführungen, einer sinnvollen Wiederverwendung zugeführt werden können, wobei das vorliegende Lösungsmittel mitverwendet oder nach Abdestillieren gegebenenfalls durch ein anderes Lösungsmittel ersetzt werden kann.

Zur Ausbeuteoptimierung ist es auch möglich, das gemäß Verfahrensstufe (iv) abgetrennte Wasser und/oder das im organischen Lösungsmittel unlösliche feste Material mit einem Lösungsmittel der beispielhaft genannten Art zu extrahieren und die dabei anfallende Lösungsmittelphase mit der Hauptmenge der gemäß Verfahrensstufe (iv) erhaltenen Lösung zu vereinigen.

In den nachfolgenden Beispielen beziehen sich alle Prozentangaben auf das Gewicht.

### Beispiel 1

In einer Kabine mit Wasserabscheidung wird 1 kg Lack verspntzt. Es handelt sich um einen 50 %igen, lösungsmittelhaltigen Klarlack, dessen Bindemittel aus einem handelsüblichen Polyacrylat, (®Desmophen A 450, Bayer AG) mit einem OH-Gehalt von 2,0 %, bezogen auf das Festharz, und der äquivalenten Menge trimerisiertes Hexamethylenndiisocyanat (®Desmodur N 3390, Bayer AG) mit einem NCO-Gehalt von 19,4 % besteht. Das Lacklösemittel ist Xylol. Vor dem Spritzen wurden in dem Kabinenwasser 50 g Di-n-butylamin und 10 g eines handelsüblichen Emulgators (Emulgator NP 20, ein ethoxyliertes Nonylphenol, Handelsprodukt der Firma Bayer AG) gelöst. Als entklebend wirkendes Koagulierungsmittel ist dem Kabinenwasser in einer Konzentration von 0,4 % ®Ipafloc, ein Tonerdeprodukt der Firma IPA, zugesetzt worden. Das Gemisch aus Kabinenwasser, ®Ipafloc und ausreagiertem "Overspray" wird in ein Absetzbecken geleitet, wo es mit 20 % ®Ipased, einem handelsüblichen Koagulierungsmittel auf Tonerde-Basis der Firma IPA, bezogen auf "Overspray" vermischt wird.

Nach Beendigung des Spritzvorgangs wird der abgesetzte Lackschlamm (2,5 kg) abgeräumt und in einen 5-1 Rührbehälter gefüllt. Bei Raumtemperatur werden unter gutem Rühren 2,5 1 Xylol zugegeben. Das Wasser wird azeotrop abdestilliert, dann die Tonerde abfiltriert. Die als Filtrat anfallende Lösung enthält 95 % des ursprünglich eingesetzten Lackbindemittels, welches auf diese Weise wiederverwendet werden kann. Die Bindemittellösung wird auf einen Festgehalt von 50 % eingeengt.

Das so wiedergewonnene Bindemittel wird mit einer, den Hydroxylgruppen äquivalenten Menge an ®Desmodur N 3390 versetzt und als 2-Komponenten-Polyurethanlack auf ein Prüfblech per Spritzauftrag aufgetragen. Nach Aushärtung bei Raumtemperatur erhält man einen klaren, vernetzten, lösemittelbeständigen Lackfilm.

### Beispiel 2

Man verfährt wie in Beispiel 1 beschrieben. Das wiedergewonnene Bindemittel wird als 1-Komponenten-Polyurethansystem appliziert und 30 Minuten bei 170°C eingebrannt. Man erhält einen klaren, vernetzten, lösemittelbständigen Lackfilm.

### Beispiel 3

Man verfährt wie in Beispiel 1 angegeben unter Verwendung des gleichen Lackes. Der abgeräumte Lackschlamm wird in einen 5-1-Rührbehälter gegeben. Bei Raumtemperatur werden unter gutem Rühren. 2,5 l Toluol zugegeben. Das Wasser wird azeotrop abdestilliert, dann die Tonerde abfiltriert Nach Zugabe von 2,5 g Zinn-(II)-octoat wird die Bindemittellösung in einem Sprühtrockner zu Pulverlack verarbeitet.

Der Pulverlack wird auf ein Prüfblech appliziert und 30 Minuten bei 160°C eingebrannt. Man erhält einen klaren, vernetzten, lösemittelbeständigen Lackfilm.

### Beispiel 4

Man verfährt gemäß Beispiel 1 und verspntzt 1 kg Lack unter Verwendung des gleichen Polyisocyanates und Koagulierungsmittels. Als Polyol wird ein handelsüblicher, hydroxygruppenhaltiger Polyester (®Desmophen 670, Bayer AG) mit einem OH-Gehalt von 4,3 %, bezogen auf das Festharz, verwendet. Lacklösemittel ist Butylacetat. Dem Kabinenwasser wurde vor dem Spritzen 100 g wasserlösliches Diisopropylamin zugesetzt.

Der entstandene Lackschlamm wird in einen 5-1-Rührbehälter gefüllt. Bei Raumtemperatur werden 2,0 1 Butylacetat zugegeben. Die Aufarbeitung erfolgt wie in Beispiel 1.

Das so wiedergewonnene Bindemittel wird mit einer. den vorliegenden Hydroxylgruppen äquivalenten Menge ®Desmodur N 3390 versetzt und auf einem Prüfblech per Spritzauftrag appliziert. Nach Aushärtung bei Raumtemperatur erhält man einen klaren, vernetzten, lösungsmittelbeständigen Lackfilm.

### Beispiel 5

Man verfährt gemäß Beispiel 1 unter Verwendung des gleichen Polyols und Koagulierungsmittels. Als Polyisocyanat wird in äquivalenter Menge ein Mischtrimerisat aus Toluylendiisocyanat und Hexamethylendiisocyanat (®Desmodur HL, Bayer AG) verwendet.

Das quantitativ wiedergewonnene Bindemittel wird mit 500 g ®Desmophen A 450 abgemischt. Die Abmischung wird mit einer, den Hydroxylgruppen äquivalenten Menge an ®Desmodur HL versetzt und als 2-Komponenten-Polyurethanlack auf ein Prüfblech per Spritzauftrag appliziert Nach Aushärtung bei Raumtemperatur erhält man einen klaren, vernetzten, lösungsmittelbeständigen Lackfilm.

### Beispiel 6

Man verfährt wie in Beispiel 1 beschrieben unter Verwendung des Lackes aus Beispiel 4. Dem Kabinenwasser wurde vor dem Spritzen 110 g wasserlösliches Diisopropanolamin zugesetzt. Lösungsmittel für die Extraktion ist Cyclohexanon. Die als Filtrat anfallende Lösung enthält 96 % des ursprünglich eingesetzten Bindemittels.

Das so wiedergewonnene Bindemittel wird mit einer, den vorliegenden Hydroxylgruppen äquivalenten Menge ®Desmodur N 3390 versetzt und auf ein Prüfblech aufgetragen. Nach Aushärtung bei Raumtemperatur erhält man einen klaren, vernetzten, lösungsmittelbeständigen Lackfilm.

### Beispiel 7

Man verfährt gemäß Beispiel 1. Vor dem Verspritzen des Lackes wurden in dem Kabinenwasser 40 g Butanonoxim mit Hilfe von 5 g Emulgator NP 20 als Emulgator emulgiert. Lösungsmittel für die Extraktion ist Toluol. Das quantitativ als Lösung wiedergwonnene Bindemittel wird in einem Sprühtrockner zu Pulverlack verarbeitet.

Der Pulverlack wird auf ein Prüfblech appliziert und 30 Minuten bei 180°C eingebrannt. Man erhält man einen klaren, vernetzten, lösungsmittelbeständigen Lackfllm.

### Beispiel 8

Man verfährt gemäß Beispiel 1. Vor dem Verspritzen des Lackes werden in dem Kabinenwasser 40 g Acetonoxim gelöst. Lösungsmittel für die Extraktion ist Butylacetat. Das Wasser wird azeotrop unter Vakuum bei 80°C abdestilliert.

Das zu 92 % wiedergewonnene Bindemittel wird als 1-Komponenten-Polyurethansystem appliziert und 30 Minuten bei 140°C eingebrannt. Man erhält einen klaren, vernetzten, lösungsmittelbeständigen Lackfilm.

### Beispiel 9

Man verfährt wie in Beispiel 1 beschrieben und verspritzt 1 kg Lack unter Verwendung des gleichen Polyisocyanates und Koagulierungsmittels. Als Polyol wird ein handelsübliches, hydroxygruppenhaltiges Polyacrylat (®Desmophen A 160, Bayer AG) mit einem OH-Gehalt von 2,7 %, bezogen auf das Festharz, verwendet. Lacklösemittel ist Xylol. In dem Kabinenwasser wurde vor dem Spritzen 100 g Stearylamin unter Verwendung von 5 g Emulgator NP 20 als Emulgator emulgiert. Die Aufarbeitung erfolgt wie in Beispiel 1 beschrieben mit Cyclohexanon als Lösungsmittel.

Das so wiedergewonnene Bindemittel wird mit einer, den vorliegenden Hydroxylgruppen äquivalenten Menge ®Desmodur N 3390 versetzt und auf ein Prüfblech aufgetragen. Nach Aushärtung bei Raumtemperatur erhält man einen klaren, vernetzten, lösemittelbeständigen Lackfilm.

### Beispiel 10

Man verfährt gemäß Beispiel 1 unter Verwendung des Lackes aus Beispiel 9. In dem Kabinenwasser wurden vor dem Spritzen 35 g n-Di-n-butylamin und 35 g Di-n-propylamin unter Mitverwendung von 5 g ®Levapon OLN (Bayer AG) als Emulgator emulgiert Lösungsmittel für die Extraktion ist Xylol.

Das quantitativ wiedergewonnene Bindemittel wird als 1-Komponenten-Polyurethansystem per Spritzauftrag appliziert. Nach 30 Minuten bei 160°C erhält man einen klaren, lösemittelbestandigen Lackfilm.

## Patentansprüche

1. Verfahren zur Wiederverwertung des beim Verspritzen von lösungsmittelhaltigen 2-Komponenten-Polyurethanlacken oder feuchtigkeitstrocknenden 1-Komponenten-Polyurethanlacken anfallenden "Overspray", dadurch gekennzeichnet, daß man
i) den "Overspray" mit Hilfe einer wäßrigen Phase aus der Abluft der Beschichtungsanlage auswäscht, die, gegebenenfalls unter Mitverwendung von Emulgatoren, gelöste oder dispergierte Verbindungen enthält, welche gegenüber Isocyanatgruppen eine höhere Reaktivität aufweisen als Wasser und die gegebenenfalls in den 2-Komponenten-Polyurethanlacken mitverwendete Reaktivkomponente mit gegenüber Isocyanatgruppen reaktionsfähigen Gruppen,
ii) den in der Stufe (i) spontan gebildeten chemisch modifizierten "Overspray" unter Einsatz von Koagulierungsmitteln, die gegebenenfalls bereits dem Waschwasser zugesetzt worden sind, in Form von Lackschlamm isoliert,
iii) den aus ausreagierten Lackbestandteilen und Koagulierungsmitteln sowie aus Wasser bestehenden Lackschlamm, gegebenenenfalls nach Entfernung zumindest eines Teils des Wassers, mit einem organischen Lösungsmittel vermischt.
iv) die gemäß (iii) anfallende organische Phase von der gegebenenfalls vorliegenden, wäßrigen Phase und/oder von gegebenenfalls vorliegenden, unlöslichen Bestandteilen befreit und die darin gelösten, organischen Bestandteile einer Wiederverwendung zuführt.

2. Verfahren gemäß Anspruch 1, dadurch gekennzeichnet, daß man in der Verfahrensstufe (i) als gegenüber Isocyanatgruppen reaktionsfähige Verbindungen primäre oder sekundäre Monoamine mit aliphatisch gebundenen Aminogruppen verwendet.

3. Verfahren gemäß Anspruch 1, dadurch gekennzeichnet, daß man in der Verfahrensstufe (i) als gegenüber Isocyanatgruppen reaktionsfähige Verbindungen Oxime verwendet.

4. Verfahren gemaß Anspruch 1, dadurch gekennzeichnet, daß man in der Verfahrensstufe (i) als gegenüber Isocyanatgruppen reaktionsfähige Verbindungen Aminoalkohole verwendet.

5. Verfahren gemäß Anspruch 1, dadurch gekennzeichnet, daß man die gemäß Verfahrensschritt (iv) anfallende Lösung bzw. das darin gelöste, organische Material in Bindemitteln für 2-Komponenten-Polyurethanlacke verwendet.

6. Verfahren gemäß Anspruch 1 bis 3, dadurch gekennzeichnet, daß man gemäß Verfahrensstufe (iv) anfallende Lösung bzw. das darin gelöste, organische Material als/oder zur Herstellung von unter dem Einfluß von Hitze vernetzbare(n) 1-Komponenten-Polyurethanlacke(n) verwendet.

7. Verfahren gemäß Anspruch 1 bis 3, dadurch gekennzeichnet, daß man in der gemäß Verfahrensstufe (iv) anfallende Lösung gelöste, organische Material vom Lösungsmittel befreit und zur Herstellung von Pulverlacken verwendet.

8. Verfahren gemäß Anspruch 1, dadurch gekennzeichnet, daß man das gemäß Verfahrensstufe (iv) abgetrennte Wasser und/oder das im ursprünglich eingesetzten, organischen Lösungsmittel unlösliche, feste Material mit einem Lösungsmittel extrahiert und die dabei anfallende Lösungsmittelphase mit der Hauptmenge der gemäß Verfahrensstufe (iv) erhaltenen Lösung vereinigt.

## Claims

1. Process for reclaiming the overspray accruing in the course of spraying 2-component polyurethane lacquers containing solvent or 1-component polyurethane lacquers which dry in the presence of moisture, characterised in that
i) the overspray is washed out of the exhaust air of the coating plant with the aid of an aqueous phase which, optionally with concomitant use of emulsifiers, contains dissolved or dispersed compounds that are more reactive with isocyanate groups than are water and the reactive component having groups capable of reacting with isocyanate groups that is optionally used concomitantly in the 2-component polyurethane lacquers,
ii) the chemically modified overspray formed spontaneously in step (i) is isolated in the form of lacquer sludge by the use of coagulating agents which have optionally already been added to the wash water,
iii) the lacquer sludge, consisting of fully reacted lacquer constituents and coagulating agents as well as water, is mixed, optionally after at least some of the water has been removed, with an organic solvent,
iv) the organic phase accruing in accordance with (iii) is freed of the aqueous phase which may be present and/or of insoluble constituents which may be present and the organic constituents dissolved therein are made available for re-use.

2. Process according to Claim 1, characterised in that by way of compounds capable of reacting with isocyanate groups in process step (i) use is made of primary or secondary monoamines having aliphatically bonded amino groups.

3. Process according to Claim 1, characterised in that by way of compounds capable of reacting with isocyanate groups in process step (i) use is made of oximes.

4. Process according to Claim 1, characterised in that by way of compounds capable of reacting with isocyanate groups in process step (i) use is made of amino alcohols.

5. Process according to Claim 1, characterised in that the solution accruing according to process step (iv) or the organic material dissolved therein is used in binding agents for 2-component polyurethane lacquers.

6. Process according to Claims 1 to 3, characterised in that the solution accruing according to process step (iv) or the organic material dissolved therein is used as, or for the production of, 1-component polyurethane lacquer(s) which'crosslink under the influence of heat.

7. Process according to Claims 1 to 3, characterised in that organic material dissolved in the solution accruing according to process step (iv) is freed of the solvent and used for the production of coating powders.

8. Process according to Claim 1, characterised in that the water separated according to process step (iv) and/or the insoluble solid material in the organic solvent originally employed is extracted with a solvent and the solvent phase accruing thereby is combined with the bulk of the solution obtained according to process step (iv).

## Revendications

1. Procédé pour la récupération du "overspray" que l'on obtient lors de l'application par pulvérisation de laques, de vernis ou de peintures de polyuréthanne à deux composants contenant des solvants ou encore de laques, de vernis ou de peintures de polyuréthanne à un seul composant séchant à l'humidité, caractérisé en ce que
i) on élimine par lavage de l'air d'évacuation de l'installation d'enduction le "overspray" à l'aide d'une phase aqueuse qui contient, le cas échéant lors de l'utilisation conjointe d'émulsifiants, des composés dissous ou mis en dispersion qui présentent une réactivité vis-à-vis de groupes isocyanate supérieure à celle de l'eau et à celle du composant réactif utilisé le cas échéant de manière conjointe dans les laques, dans les vernis ou dans les peintures de polyuréthanne à deux composants, contenant des groupes aptes à réagir vis-à-vis de groupes isocyanate,
ii) on isole sous forme d'une boue de laque, de vernis ou de peinture, l'"overspray" soumis à une modification par voie chimique, qui s'est formé spontanément à l'étape i), en mettant en oeuvre des agents de coagulation qui, le cas échéant, ont déjà été ajoutés à l'eau de lavage,
iii) on mélange avec un solvant organique les constituants de laques, de vernis ou de peintures ayant subi une réaction complète, ainsi que les agents de coagulation et la boue de laque, de vernis ou de peinture constituée d'eau, le cas échéant après élimination d'au moins une partie de l'eau,
iv) on libère la phase organique que l'on obtient conformément à iii) de la phase aqueuse éventuellement présente et/ou des constituants insolubles éventuellement présents, et on achemine à un recyclage les constituants organiques qui y sont présents sous fcrme dissoute.

2. Procédé selon la revendication 1, caractérisé en ce qu'on utilise, dans l'étape opératoire (i), à titre de composés aptes à réagir vis-à-vis de groupes isocyanate, des monoamines primaires ou secondaires contenant des groupes amino liés à un radical aliphatique.

3. Procédé selon la revendication 1, caractérisé en ce qu'on utilise, dans l'étape opératoire (i), à titre de composés aptes à réagir vis-à-vis de groupes isocyanate, des oximes.

4. Procédé selon la revendication 1, caractérisé en ce qu'on utilise, dans l'étape opératoire (i), à titre de composés aptes à réagir vis-à-vis de groupes isocyanate, des aminoalcools.

5. Procédé selon la revendication 1, caractérisé en ce qu'on utilise la solution obtenue conformément à l'étape opératoire (iv), respectivement la matière organique qui y est présente sous forme dissoute, dans des liants pour des laques, des vernis ou des peintures de polyuréthanne à deux composants.

6. Procédé selon l'une quelconque des revendications 1 à 3, caractérisé en ce qu'on utilise la solution que l'on obtient conformément à l'étape opératoire (iv), respectivement la matière organique qui y est présente de manière dissoute, à titre/ou pour la préparation de laques, de vernis ou de peintures de polyuréthanne à un seul composant aptes à subir une réticulation sous l'influence de la chaleur.

7. Procédé selon l'une quelconque des revendications 1 à 3, caractérisé en ce qu'on libère du solvant la matière organique dissoute dans la solution obtenue conformément à l'étape opératoire (iv) et on l'utilise pour la préparation de laques, de vernis ou de peintures pulvérulents.

8. Procédé selon la revendication 1, caractérisé en ce qu'on extrait dans un solvant l'eau séparée conformément à l'étape opératoire (iv) et/ou la matière solide insoluble dans le solvant organique mis en oeuvre à l'origine et on combine la phase de solvant que l'on obtient en l'occurrence avec la quantité principale de la solution obtenue conformément à l'étape opératoire (iv).
